# EUROPEAN PATENT SPECIFICATION

(11) **EP 4 249 806 B1**
(45) Date of publication and mention of the grant of the patent: **18.09.2024**
(21) Application number: 23163245.6
(22) Date of filing: 21.03.2023
(51) Int. Cl.: F24B 1/26, A47J 37/07

(54) **SOLID FUEL STOVE**
FESTBRENNSTOFFHERD
POÊLE À COMBUSTIBLE SOLIDE

(30) Priority: 21.03.2022 IT 202200005525
(43) Date of publication of application: 27.09.2023
(73) Proprietor: THERMOROSSI S.P.A., 36011 Arsiero (Vicenza) (IT)
(72) Inventor: ROSSI, Fabio, 36011 Arsiero (Vicenza) (IT)
(74) Representative: Feltrinelli, Secondo Andrea

(56) References cited:
- KR-A- 20160 125 217
- US-A- 5 105 796
- US-A1- 2004 094 141
- US-A1- 2017 164 787

## Description

### TECHNICAL FIELD OF THE INVENTION

The present invention relates to a solid fuel stove; in particular, the present invention relates to a stove fed by solid fuel which comprises a cooking chamber which can be used both as a cooking oven and as a hob with adjustable air flow.

### STATE OF THE PRIOR ART

In the state of the prior art, numerous solid fuel stoves are provided. These stoves generally comprise a combustion chamber intended to house the solid fuel which, in use, supplies heat to the surrounding environment following its combustion.

Furthermore, are also provided stoves fed by solid fuel which comprise, in addition to a combustion chamber, also a cooking chamber or oven. Such stoves typically comprise a cooking chamber placed next to the combustion chamber in operative heat transfer with the combustion chamber itself.

Access to the cooking chamber is possible through a door that can be opened so as to allow the insertion of the food to be cooked, and closed so as to allow the actual cooking of the latter.

During use, it is not possible to access the cooking chamber because this cooking chamber can only be used as an oven.

The state of the prior art also comprises stoves fed by solid fuel which are equipped, above the combustion chamber, with a hob which receives the heat from the combustion chamber.

The hob can be used to cook food but, in general, it is not configured as a cooking chamber or oven. For this reason, the hob present in this type of stove cannot be used as a cooking oven.

The state of the prior art also envisages stoves fed by solid fuel which comprise a combustion chamber, a cooking chamber located alongside the combustion chamber, and a cooking surface, located above the combustion chamber, which receive the heat from the combustion chamber.

The cooking surface, as well as the cooking chamber, of these stoves does not provide for the possibility of varying the type and intensity of cooking to be obtained: the cooking chamber works like an oven only with the relative door closed and the hob works only as a hob receiving heat from underneath.

The cooking in these stoves is not very versatile for the preparation of foods that require regulation of the heat intensity and the type of cooking.

Moreover, the separation between the cooking chamber, which can be used as an oven, and the hob also entails an increase in the dimensions and a certain complexity of the stove.

Documents KR20160125217A, US2004094141A1, US5105796A and US2017164787A1 describe stoves according to the state of the prior art which present the aforementioned problems.

The need is therefore felt for a stove fed with solid fuel which allows the disadvantages of the prior art listed above to be overcome.

### OBJECTS OF THE INVENTION

The technical aim of the present invention is to improve the state of the prior art inherent to stoves fed with solid fuel.

Within the scope of this aim, an object of the present invention is to provide a stove fed with solid fuel which comprises a cooking chamber which can be used both as a cooking oven and as a hob with the possibility of adjusting the intensity and type of cooking.

Another object of the present invention is to provide a stove fed by solid fuel which comprises a hob and an oven with an opening and closing element equipped with an adjustment and control mechanism which allows to obtain an adjustable air flow, so as to be able to use different types of cooking for a given food.

Yet another object is to provide a stove fed with solid fuel which comprises an opening and closing element designed to minimize, when opened, its overall dimensions in the operating environment of the stove.

Finally, another object of the present invention is to provide a stove fed with solid fuel which allows a safe, simple and fast adjustment of the operating position of an opening and closing element.

This task and these objects are achieved by a stove fed, in use, with solid fuel according to claim 1.

The dependent claims refer to preferred and advantageous embodiments of the invention.

### BRIEF DESCRIPTION OF THE DRAWINGS

Other features and advantages of the invention will be more evident from the description of an example of embodiment of a solid fuel stove, illustrated by way of example in the accompanying drawings in which:

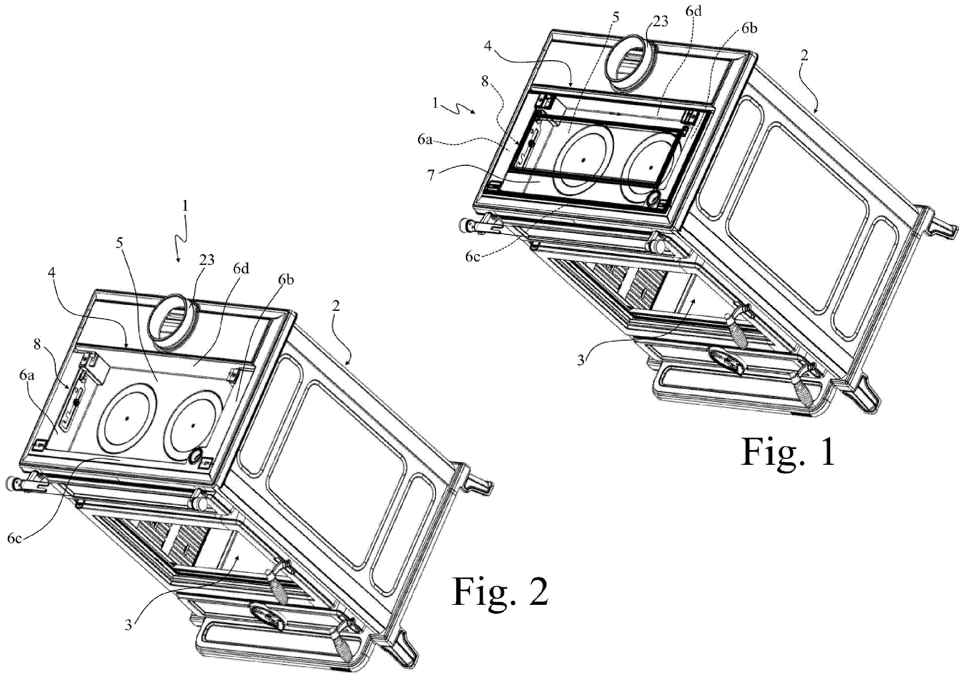

figure 1 is a perspective view of a solid fuel stove according to an example of embodiment of the present invention in an operating position,
figure 2 is a perspective view of a solid fuel stove according to the example of embodiment of the present invention shown in figure 1 without an opening and closing element,

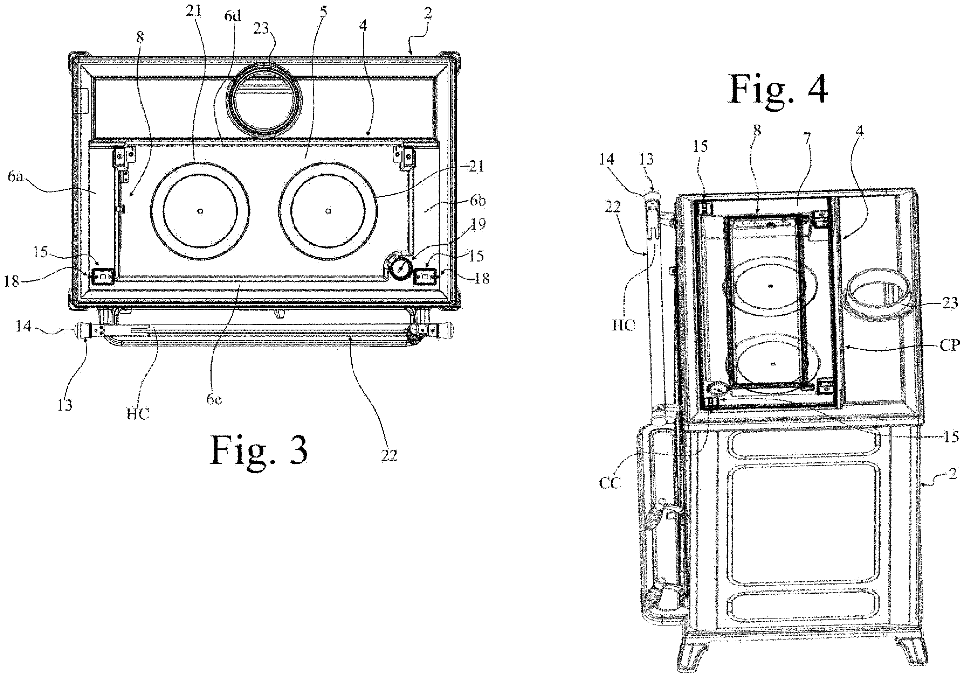

figure 3 is a top view of a solid fuel stove according to the example of embodiment of the present invention shown in figure 1 without an opening and closing element,
figure 4 is a top perspective view of a solid fuel stove according to the example of embodiment of the present invention shown in figure 1,

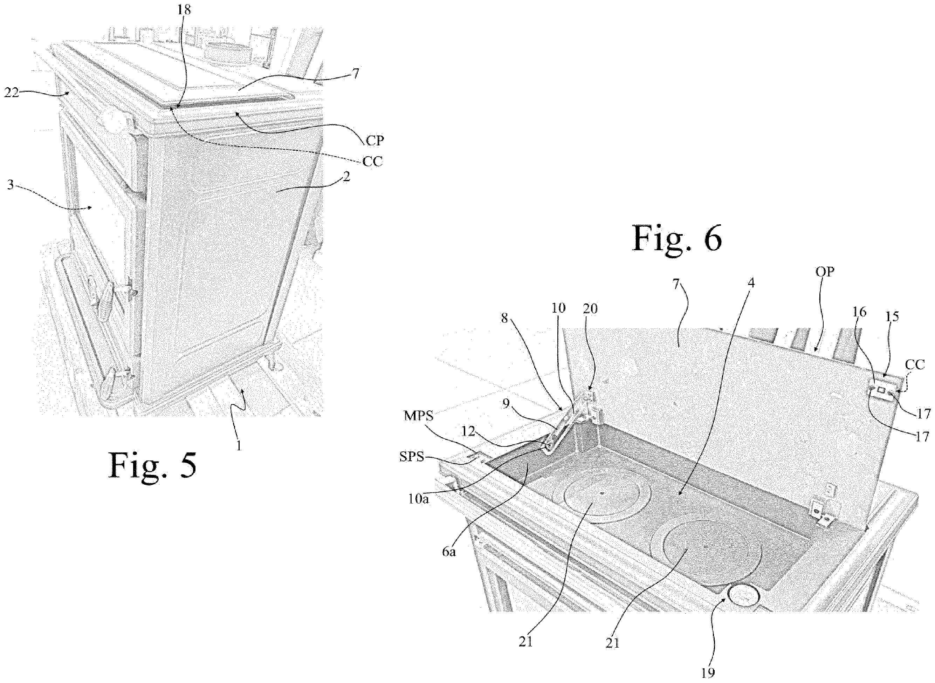

figure 5 is a partial perspective view of a solid fuel stove according to the example of embodiment of the present invention shown in figure 1 in a closed operating position,
figure 6 is a partial perspective view of a solid fuel stove according to the example of embodiment of the present invention shown in figure 1 in an open operating position,

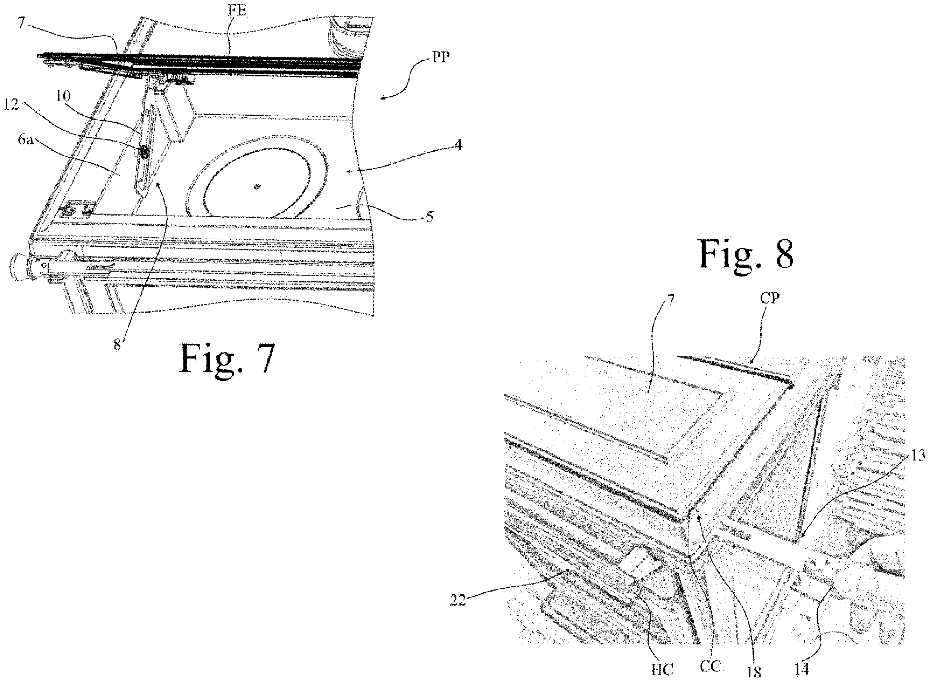

figure 7 is a partial perspective view of a solid fuel stove according to the example of embodiment of the present invention shown in figure 1 in a partially open operating position,
figure 8 shows a detail of a solid fuel stove according to the example of embodiment of the present invention shown in figure 1,

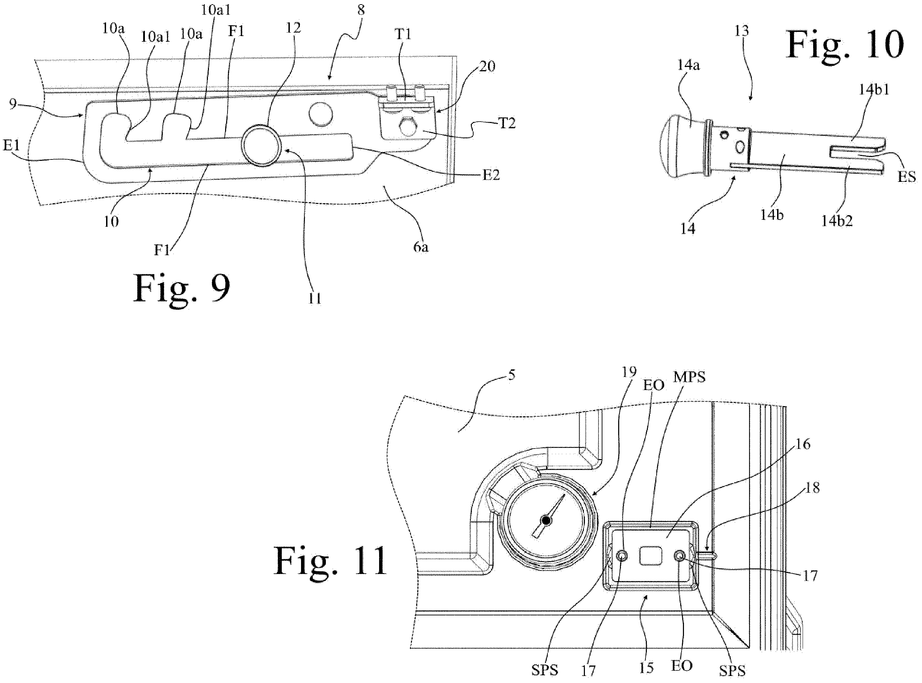

figure 9 shows an enlargement of some components of a solid fuel stove according to the example of embodiment of the present invention shown in figure 1,
figure 10 shows a perspective view of a component of a solid fuel stove according to the example of embodiment of the present invention shown in figure 1,
figure 11 shows an enlargement from above of some components of a solid fuel stove according to the example of embodiment of the present invention shown in figure 1.

In the accompanying drawings, identical parts or components are identified by the same reference numbers.

### EXAMPLES OF EMBODIMENT OF THE INVENTION

With reference to the attached figures, the numeral 1 indicates as a whole a stove fed, in use, with solid fuel according to a non-limiting example of embodiment of the present invention.

According to the present invention, the stove 1 can be fed, in use, with a solid fuel such as biomass, for example wood in pieces or pellets or the like, however, other types of solid fuels could also be used.

By biomass it is intended any biodegradable substance deriving from products, waste and/or residues of animal and/or vegetable biological origin deriving from agriculture, forestry and related industries, including fishing and aquaculture, cuttings and prunings deriving from public and private green areas, as well as any biodegradable substance deriving from industrial and urban waste.

As will be better understood later in the description, the stove 1 according to the present invention will allow a cooking chamber to be used both as a cooking oven and as a hob with adjustable air flow, through a simple and effective adjustment and control of an opening and closing element.

The stove 1 fed, in use, with solid fuel according to the present invention comprises a stove body 2 which includes or delimits a combustion chamber 3 and a cooking chamber 4 which, in use, receives heat from the combustion chamber 3.

The combustion chamber 3 is provided to house the solid fuel, for example biomass such as wood, which is, in use, burned to supply heat to the cooking chamber 4.

According to the embodiment illustrated in the figures, the stove 1 comprises a fume outlet 23 arranged in the upper wall of the stove body 2, however, according to other embodiments not shown, the stove body 2 could comprise the fume outlet in a side or back wall.

The cooking chamber 4 comprises a bottom 5 and/or top wall and a plurality of perimeter walls 6a, 6b, 6c, 6d, for example two side walls 6a, 6b, a front, in use, wall 6c and a rear, in use, wall 6d, which define with the bottom and/or top wall 5 a cooking space CS inside the cooking chamber 4.

In the embodiment illustrated in the figures, the cooking chamber 4 is included or delimited above the combustion chamber 3 to improve or facilitate, in use, the transfer of heat coming from the combustion chamber 3.

The cooking chamber 4 comprises four perimeter walls 6a, 6b, 6c, 6d, of which two side walls 6a, 6b, a front, in use, wall 6c and a rear, in use, wall 6d as well as a bottom wall 5, which define the cooking space CS inside the cooking chamber 4.

According to other non-limiting examples of embodiment of the present invention, the cooking chamber 4 could comprise three perimeter walls 6a, 6b, 6c, a bottom wall 5 and a top wall.

The cooking chamber 4 also comprises an opening and closing element 7 movable or rotatable between an open operating position OP, in which it delimits with the bottom 5 and/or top wall and with the plurality of perimeter walls 6a, 6b, 6c , 6d a first opening FO for accessing the cooking space CS, at least one partially open operating position PP, in which it delimits with the bottom and/or top wall 5 and with the plurality of perimeter walls 6a, 6b, 6c, 6d a second opening SO for accessing the cooking space CS or, in use, of heat escaping from the cooking space CS, where the second opening SO is spatially lower than the first opening FO, and a closed operating position CP, in which it closes or blocks access to or, in use, prevents heat from escaping from the cooking space CS.

According to the figures, the opening and closing element 7 is hinged to the cooking chamber 4 and, therefore, has a rotary movement.

In other non-limiting examples of embodiment of the present invention, the opening and closing element 7 could be movable in forward and backward translation along a displacement axis parallel to the side walls 6a, 6b, for example by means of suitable displacement means, such as shoes or wheels, operatively associated with suitable guide means, such as parallel sliding guides mounted on the side walls 6a, 6b of the cooking chamber 4.

With reference to wording "spatially inferior", the spatial dimension of the openings FO, SO or other openings which are delimited in the event of a rotation of the opening and closing element 7 are to be understood as measured by the length of the circumference arc defined by the rotation of the front free end FE of the opening and closing element 7 from the closed operating position CP to the open OP or partially open operating position PP considered.

On the other hand, in the case of a translational movement of the opening and closing element 7, the spatial dimension of the openings delimited by the latter can normally be evaluated, for example as the area enclosed by the delimiting surface of the opening considered.

More in detail, the stove 1 according to the present invention comprises at least one adjustment and control mechanism 8 configured to adjust and control the operating position OP, PP, CP of the opening and closing element 7 so that the cooking chamber 4 is, in use, employable, when the opening and closing element 7 is in the closed operating position CP, as a cooking oven while when the opening and closing element 7 is in the open operating position OP or in the at least one partially open operating position PP as a hob with adjustable airflow.

The stove 1 comprises a cooking chamber 4 which, depending on the operating position of the opening and closing element 7, can assume various functions, i.e. it can be used as a cooking oven when the opening and closing element 7 is in the position closed operating position CP, and eventually semi-closed (not shown), while it can be used as a hob with adjustable air flow when the opening and closing element 7 is in the open OP or partially open operating position PP.

By hob with adjustable air flow it is intended a hob whose quantity of air, and consequently the cooling of the hob itself, can be adjusted simply by changing the operating position of the opening and closing element 7.

Thus, for example, by moving or rotating the opening and closing element 7 from the open operating position OP towards the closed operating position CP, it is possible to obtain at least one partially open operating position PP, and also a series of partially open operating positions PP which delimit the access openings to the cooking space CS and the heat escaping from the cooking space CS progressively spatially decreasing with each other.

In this regard, the adjustment of the operating position of the opening and closing element 7 by means of the adjustment and control mechanism 8 allows to adjust and control the flow of cooling air towards the cooking chamber 4 and/or the bottom wall 5 so as to have a wide range of cooking types and temperatures required, for example, for a given food.

The adjustment and control mechanism 8 comprises a first member 9, operatively connected with the opening and closing element 7 or with the cooking chamber 4, which comprises or defines a sliding slot or groove 10 and a second member 11, operatively connected with the cooking chamber 4 or with the opening and closing element 7, which comprises or defines a protruding element 12 slidably engaged with the sliding slot or groove 10.

According to the non-limiting example of embodiment of the present invention shown in the figures, the first member 9 is operatively connected, for example pivoted, to the opening and closing element 7 and includes or delimits a sliding slot or groove 10 while the second member 11 is operatively connected, for example fixed, to the cooking chamber 4, possibly with one of its perimeter walls 6a, and comprises or defines a protruding element 12 slidably engaged with the sliding slot or groove 10.

In other examples of embodiment of the present invention, the first member 9 could be operatively connected, for example pivoted, to the cooking chamber 4, possibly with one of its perimeter walls 6a, and could either include or delimit a sliding slot or groove 10 while the second member 11 could be operatively connected, for example fixed, to the opening and closing element 7, and could either comprise or define a protruding element 12 slidably engaged with the sliding slot or groove 10.

Possibly, the stove 1 can also comprise a connection component 20, for example L-shaped, including a first terminal portion T1 and a second terminal portion T2, preferably fixed, in its first terminal portion Tl, with the opening and closing element 7 and operatively connected, for example pivoted, in its second terminal portion T2 with the first member 9.

Basically, the connection component 20, if present, acts as a connection between the first member 9 and the opening and closing element 7.

From a functional point of view and according to the non-limiting example of embodiment shown in the figures, when the opening and closing element 7 is moved by the user, the sliding slot or groove 10 can slide on the protruding element 12 engaged in it to adjust and control the operating position OP, PP, CP of the opening and closing element 7.

It should be noted that if the protruding element 12 were fixed to the opening and closing element 7 while the sliding slot or groove 10 was hinged to the cooking chamber 4, possibly with one of its perimeter walls 6a, as described in the other non-limiting example of embodiment of the present invention mentioned above, would be the protruding element 12 to slide in the sliding slot or groove 10.

From a structural point of view, the sliding slot or groove 10 can advantageously comprise two flanks F1, F2, a first end E1, a second end E2 distal to the first end E1, and one or more hollowed portions 10a configured to allow the opening and closing element 7 to be locked in at least one of the operating positions OP, PP, CP.

In particular, at least one of the one or more hollowed portions 10a is delimited at or near the first or second end E1, E2.

Moreover, at least one of the one or more hollowed portions 10a, preferably each of the one or more hollowed portions 10a, can advantageously comprise at least one section 10a1 whose development direction forms an acute angle with the development direction of the flank F1, F2 or of the portion of the flank F1, F2 adjacent to this section 10a1. This conformation makes it easier to lock the opening and closing element 7 in at least one of the operating positions OP, PP, CP.

According to the non-limiting example of embodiment of the present invention shown in the figures, a hollowed portion 10a is delimited at the first end E1 to allow locking of the opening and closing element in the open operating position OP.

Preferably, the one or more hollowed portions 10a is/are formed in at least one of the flanks F1, F2 of the sliding slot or groove 10.

Alternatively, for example in the case in which the opening and closing element 7 could be moved in forward and backward translation along an axis of movement parallel to the side walls 6a, 6b, the one or more hollowed portions 10a can/could be obtained on a possible bottom included or delimited in the sliding slot or groove 10.

Possibly, the protruding element 12 can be slidably engaged in the sliding slot or groove 10, for example by coupling with a certain interference, so that, when the opening and closing element 7 is in at least a partially open operating position PP, the protruding element 12 remains stationary or blocked, for example by friction, in the sliding slot or groove 10, possibly in a hollowed portion 10a thereof, to keep the opening and closing element 7 stationary or blocked in this partially open operating position PP.

To facilitate this continuous movement, the opening and closing element 7 can be counterbalanced by means of weights or a spring mechanism.

In other words, the opening and closing element 7 can be stopped or locked in an intermediate operating position PP and/or in the open operating position OP by fitting the protruding element 12 into a respective hollowed portion 10a of the sliding slot or groove 10 while, in at least another non-limiting example of embodiment of the present invention, the opening and closing element 7 can be stopped or locked in at least one intermediate operating position PP and/or in the open operating position OP by friction by means of the protruding element 12 slidingly engaged through an interference fit with the sliding slot or groove 10, and therefore without the actual engagement in a respective hollowed portion 10a.

Furthermore, the opening and closing element 7 is configured to minimize its overall dimensions with respect to the operating environment of the stove 1, for example with respect to the stove body 2.

In this regard, the opening and closing element 7 can be moved between the various operating positions OP, PP, CP while remaining within the perimeter delimited by the stove body 2. This can be achieved, for example, through a rotating movement of the opening and closing element 7.

In particular, the opening and closing element 7 can be hinged to the cooking chamber 4, for example to its side walls 6a, 6b, so that following its movement between the various operating positions OP, PP, CP, it remains confined within the perimeter delimited by the stove body 2, also avoiding interfering with the fume outlet 23, if present, included in the upper wall of the stove body 2.

In this regard, the aforementioned constructive feature allows eliminating any lateral bulk exceeding the perimeter of the stove body 2 and, at the same time, allows the functionality of any fume outlet 23 to be maintained unaltered, if present, for example positioned at the rear with respect to the cooking chamber 4.

It should be noted that, depending on the number of partially open operating positions PP to be created for the opening and closing element 7, it is possible to provide a sliding slot or groove 10 which has a hollowed portion 10a for each partially open operating position PP.

In the non-limiting example of embodiment of the present invention shown in the figures, a hollowed portion 10a is provided to stop or block the protruding element 12 and, therefore, the opening and closing element 7 in the open operating position OP and another hollowed portion 10a to stop or block the protruding element 12 and, therefore, the opening and closing element 7 in a partially open operating position PP.

Thus, for example, in other non-limiting examples of embodiment of the present invention, two, three or more hollowed portions 10a could also be provided in the sliding slot or groove 10, each corresponding to a respective partially open operating position PP of the opening and closing element 7 and, according to yet another example not shown, the hollowed portions of the first member 9 could be made in the form of a saw tooth.

The stove 1 according to the present invention also preferably comprises removable handling means 13 configured to be operatively connected to the opening and closing element 7 if it is necessary to adjust the operative position OP, PP, CP of the latter, and operatively disconnected from the opening and closing element 7 once the adjustment of its operating position OP, PP, CP has been completed.

Basically, there are preferably handling means 13 of the opening and closing element 7 which can be operatively connected to it, for example when the user wants to change the operating position OP, PP, CP of the same, and then be disconnected from the latter, once the change of the operating position OP, PP, CP has been completed. In this way, the removable handling means 13 avoid heating up when the user is using the cooking chamber 4 as a cooking oven or as a hob with adjustable air flow while they can be used in case of need to change operating position OP, PP, CP of the opening and closing element 7 without thus risking accidental burns.

Structurally, the removable handling means 13 can comprise at least one constraint component 14 which includes or delimits at least one handle element or portion 14a, for example a knob, configured to be gripped by a user to move the opening and closing element 7 and at least one connecting element or portion 14b configured to be removably connected with the opening and closing element 7.

Moreover, the stove 1 can also comprise coupling means 15 operatively connected to the opening and closing element 7, configured to allow the removable coupling of the handling means 13.

Preferably, the coupling means 15 comprises a support element 16 which defines at least one insertion opening EO and connection means 17 inserted in the at least one insertion opening EO to connect the support element 16 with the opening element and closing 7.

Optionally, the support element 16 comprises or delimits a central portion 16a and the at least one insertion opening EO is delimited at or around the central portion 16a.

Advantageously, the support element 16 defines with the opening and closing element 7 a coupling compartment CC for the removable handling means 13 or, more particularly, for the constraint component 14.

According to the non-limiting example of embodiment of the present invention shown in the figures, the support element 16 comprises a plate 16 spaced from and connected to the opening and closing element 7 by one or more nails 17, screws or the like.

Moreover, the connecting element or portion 14b preferably comprises a first prong 14b1 and a second prong 14b2 which define between them an engagement or insertion space ES for the coupling means 15 or, more particularly, for the connection means 17 of these coupling means 15.

From a functional point of view, it is possible to operatively connect the constraint component 14 with the coupling means 15 by engaging the connecting element or portion 14b with the connection means 17 in the coupling compartment CC.

In more detail, it is possible to engage the connection means 17 in the engagement or insertion space ES defined by the first and second prongs 14b1, 14b2 which will be supported by the support element 16.

The stove 1 can include signaling means 18 provided for signaling the connection point or zone CZ of the handling means 13 which can be removed with the opening and closing element 7 or, more specifically, with the coupling means 15.

According to the non-limiting example of embodiment of the present invention shown in the figures, the signaling means 18 are or comprise a reference notch defined on the stove body 2 or, more particularly, on the cooking chamber 4.

Possibly, the stove 1 can also comprise measuring and displaying means 19 of the temperature of the cooking chamber 4.

According to the non-limiting example of embodiment of the present invention shown in the figures, the measuring and displaying means 19 of the temperature of the cooking chamber 4 are or comprise a dial thermometer.

As regards the cooking chamber 4, it preferably comprises at least one cooking plate 21 housed or positioned in at least one housing or positioning area HA delimited on the bottom 5 and/or top wall.

This at least one cooking plate 21 can be used for positioning and subsequently cooking food and can have a circular, square, rectangular, etc. plan configuration.

Moreover, the cooking chamber 4 can advantageously comprise or define at least one main positioning seat MPS for the coupling means 15 so that when the opening and closing element 7 is in the closed operating position CP, the coupling means 15 are positioned in the at least one main positioning seat MPS and the opening and closing element 7 is capable of closing or blocking access to or, in use, preventing heat from escaping from the cooking space CS.

According to the non-limiting example of embodiment of the present invention shown in the figures, the at least one main positioning seat MPS is a depression formed on the stove body 2 or, more particularly, on at least one perimeter wall, for example a side wall 6a, 6b of the cooking chamber 4.

Since the coupling means 15 have a certain thickness and are connected to the opening and closing element 7, the presence of the at least one main positioning seat MPS or, more particularly, of the depression, allows to obtain an optimal closure from the hermetic point of view of the opening and closing element 7.

Optionally, the at least one main positioning seat MPS can, in turn, comprise or define at least one secondary positioning area SPS provided for housing the connection means 17 or, more particularly, the head portion included therein or thereof, when the opening and closing element 7 is in the closed operating position CP.

According to the non-limiting example of embodiment of the present invention shown in the figures, the at least one secondary positioning seat SPS is a depression formed in the main positioning seat MPS.

Preferably, the stove 1 also comprises protection means 22 configured to protect the user from any accidental contact with the cooking chamber 4.

In this regard, the protection means 22 comprise or preferably define at least one housing compartment HC for the removable handling means 13 so that the latter can be housed, when not in use, in the at least one housing compartment HC.

Basically, the protection means 22 can be used not only to protect the user from accidental contact with the cooking chamber 4, but also to house the removable handling means 13 or, more particularly, the constraint component 14 when it is not in use.

According to the non-limiting example of embodiment of the present invention shown in the figures, the protection means 22 are a handrail tube connected to the cooking chamber 4, at the outer surface of its front, in use, part 6c which comprises two ends at which a respective housing compartment HC is defined for the constraint component 14.

A non-limiting example of operation of the stove 1 is described below according to the non-limiting example of embodiment shown in the figures.

The user places the solid fuel, for example wood, inside the combustion chamber 3 and starts the combustion of the solid fuel.

Heat is therefore generated in the combustion chamber 3, which is also transferred to the cooking chamber 4 which can, therefore, begin to heat up.

Assuming that the opening and closing element 7 is in the closed operating position CP and that the user wishes to change this operating position, the latter can take the constraint component 14 positioned in the housing compartment HC of the protection means 22, identify the signaling means 18 of the connection point or zone CZ of the constraint component 14 with the opening and closing element 7, and engage, in the coupling compartment CC, the constraint component 14 with the connection means 17.

It is therefore possible for the user, by applying a given opening force on the handle element or portion 14a of the constraint component 14, to rotate the opening and closing element 7, for example, towards the open operating position OP.

In particular, the rotation of the opening and closing element 7 is allowed by the adjustment and control mechanism 8.

In more detail, the first member 9 which defines the sliding slot or groove 10, being pivoted with the opening and closing element 7, can slide on the protruding element 12 fixed on the side wall 6a of the cooking chamber 4, until the latter is not blocked in the hollowed portion 10a and is therefore able to support the opening and closing element in the open operating position OP.

Wishing to bring the opening and closing element 7 to a partially open operating position PP, for example to increase the temperature of the cooking chamber 4 by decreasing the air flow therein, the user can apply a certain closing force on the handle element or portion 14a of the constraint component 14. Upon reaching the partially open operating position PP, the protruding element 12, slidably engaged with the sliding slot or groove 10, is stopped or blocked in the hollowed portion 10a for support the opening and closing element 7 in this operating position.

In the case of a sliding slot or groove 10 having a single hollowed portion 10a corresponding, for example, to an open operating position OP, for locking the protruding element 12 in at least a partially open operating position PP, can be provided a coupling with a certain interference of the protruding element 12 with the sliding slot or groove 10 and its consequent locking by friction once the partially open operating position PP of interest has been reached and once the closing force of the user on the opening and closing element 7 has ceased, the latter can be counterbalanced by means of weights or a spring mechanism to help maintain the various operating positions.

Subsequently, wishing to return the opening and closing element 7 to the closed operating position CP, the user can go back to applying a certain closing force on the handle element or portion 14a of the constraint component 14 until the closed operating position CP is reached.

It should be noted that, both for the transition from the open operating position OP to the partially open operating position PP, and for the transition from the partially open operating position PP to the closed operating position CP, it is preferable that the user first applies an opening force on the opening and closing element 7 to release the protruding element 12 from the hollowed portion 10a in which it is blocked, and subsequently applies a closing force for the effective transition to the operating position.

Once the adjustment of the operating position OP, PP, CP of the opening and closing element 7 has been completed, the user can disconnect the constraint component 14 from the coupling means 15 or, more particularly, from the connection means 17 and reposition it inside the housing compartment HC of the protection means 22 so as to avoid overheating of the same so as to be able to reuse it safely when desired.

The stove 1 according to the present invention comprises a cooking chamber 4 which can be used both as a cooking oven and as a hob with adjustable air flow by varying the position of the opening and closing element 7.

To make this functionality possible, the stove 1 according to the present invention comprises the regulation and control mechanism 8 of the opening and closing element 7 which allows to obtain a hob with adjustable air flow, so as to be able to use different types of cooking for a given food.

Moreover, the adjustment mechanism 8 allows a safe, simple and fast adjustment of the operating position OP, PP, CP of the opening and closing element.

Furthermore, according to preferred but non-limiting examples of embodiment of the present invention, further technical arrangements are provided which are useful for adjusting the operating position OP, PP, CP of the opening and closing element 7 in safety, with versatility, speed and simplicity, thus being able to exploit the most of the cooking chamber 4 in its multiple functions, for example as a cooking oven or as a hob with adjustable air flow.

It has thus been seen how the invention fully achieves the proposed objects.

Modifications and variations of the invention are possible within the scope of protection defined by the following claims.

## Claims

1. Solid fuel stove (1) comprising a stove body (2) which includes or defines a combustion chamber (3) and a cooking chamber (4) which, in use, receives heat from said combustion chamber (3), said cooking chamber (4) comprising a bottom wall (5) and/or a top wall, a plurality of perimeter walls (6a, 6b, 6c, 6d) which define with said bottom wall (5) and/or top wall a cooking space (CS) inside said cooking chamber (4), and an opening and closing element (7) movable or rotatable between:
an open operating position (OP), in which it defines a first opening (FO) for accessing said cooking space (CS),
at least one partially open operating position (PP), in which it defines with said bottom wall (5) and/or top wall and with said plurality of perimeter walls (6a, 6b, 6c, 6d) a second opening (SO) for accessing said cooking space (CS) or, in use, of heat escaping from said cooking space (CS), said second opening (SO) being spatially smaller than said first opening (FO), and
a closed operating position (CP), in which it closes or blocks access to or, in use, prevents heat from escaping from said cooking space (CS),
**characterized by** the fact that it comprises
at least one adjustment and control mechanism (8) configured to adjust and control the operating position (OP, PP, CP) of said opening and closing element (7) so that said cooking chamber (4) is, in use, employable, when said opening and closing element (7) is in said closed operating position (CP), as a cooking oven while when said opening and closing element (7) is in said open operating position (OP) or in said at least one partially open operating position (PP) as a hob with adjustable airflow.

2. Stove (1) according to claim 1, wherein said opening and closing element (7) is hinged to the cooking chamber (4), so that, following the movement of said opening and closing element (7) between the various operating positions (OP, PP, CP), it remains confined within the perimeter delimited by said stove body (2).

3. Stove (1) according to claim 1 or 2, wherein said adjustment and control mechanism (8) comprises a first member (9), operatively connected with said opening and closing element (7) or with said cooking chamber (4), including or delimiting a sliding slot or groove (10) and a second member (11), operatively connected with said cooking chamber (4) or with said opening and closing element (7), which comprises or defines a protruding element (12) slidably engaged with said sliding slot or groove (10).

4. Stove (1) according to the preceding claim, wherein said sliding slot or groove (10) comprises two flanks (F1, F2), a first end (E1), a second end (E2) distal from said first end ( E1), and one or more hollowed portions (10a) configured to allow locking of said opening and closing element (7) in at least one of said operative positions (OP, PP, CP), at least one of said one or more hollowed portions (10a) being delimited at or near said first or second end (E1, E2).

5. Stove (1) according to claim 3 or 4, wherein said protruding element (12) is slidably engaged in said sliding slot or groove (10) so that, when said opening and closing element (7 ) is in at least one partially open operating position (PP), said protruding element (12) remains stationary or blocked in said sliding slot or groove (10) to keep said opening and closing element (7) stationary or blocked in said at least one partially open operating position (PP).

6. Stove (1) according to any one of the preceding claims, wherein said cooking chamber (4) is included or delimited above said combustion chamber (3) to improve or facilitate, in use, the operational transfer of heat with said combustion chamber (3).

7. Stove (1) according to any one of the preceding claims, comprising removable handling means (13) configured to be:
operatively connected with said opening and closing element (7) if it is necessary to regulate said operating position (OP, PP, CP) of the latter, and
operatively disconnected from said opening and closing element (7) once the adjustment of said operating position (OP, PP, CP) has been completed.

8. Stove (1) according to the preceding claim, wherein said removable handling means (13) comprise at least one constraint component (14) which includes or delimits at least one handle element or portion (14a) configured to be gripped by a user to move said opening and closing element (7) and at least one connecting element or portion (14b) configured to be removably connected with said opening and closing element (7).

9. Stove (1) according to claim 7 or 8, comprising coupling means (15), operatively connected with said opening and closing element (7), configured to allow the removable coupling of said handling means (13).

10. Stove (1) according to the preceding claim, wherein said coupling means (15) comprise a support element (16), which defines at least one insertion opening (EO), and connection means (17) inserted in said at least one insertion opening (EO) for connecting said support element (16) with said opening and closing element (7).

11. Stove (1) according to the preceding claim, wherein said support element (16) defines with said opening and closing element (7) a coupling compartment (CC) for said removable handling means (13).

12. Stove (1) according to claim 10 or 11, wherein said support element (16) comprises or delimits a central portion (16a) and said at least one insertion opening (EO) is delimited at or around said central portion (16a).

13. Stove (1) according to any one of claims 10 to 12, wherein said connecting element or portion (14b) comprises a first prong (14b1) and a second prong (14b2) which define each other an engagement or graft space (ES) for said coupling means (15).

14. Stove (1) according to any one of claims 3 to 13, comprising a connection component (20) which includes a first terminal portion (T1) and a second terminal portion (T2), said connection component (20) being fixed, in said first terminal portion (T1), with said opening and closing element (7) and operatively connected, in said second terminal portion (T2) with said first member (9).

15. Stove (1) according to any one of claims 10 to 14, wherein said cooking chamber (4) defines or comprises at least one main positioning seat (MPS) for said coupling means (15) so that when said opening and closing element (7) is in said closed operating position (CP), said coupling means (15) are positioned in said at least one main positioning seat (MPS) and said opening and closing element (7) is capable of close or block access to or, in use, prevent heat from escaping from said cooking space (CS).

## Patentansprüche

1. Festbrennstoffofen (1), umfassend einem Ofenkörper (2), der eine Brennkammer (3) und eine Garkammer (4) enthält oder definiert, die, bei Verwendung, Wärme von der besagten Brennkammer (3) empfängt, wobei die Garkammer (4) eine Bodenwand (5) und/oder eine Oberwand, eine Vielzahl von Umfangswänden (6a, 6b, 6c, 6d), die mit der besagten Bodenwand (5) und/oder Oberwand einen Garraum (CS) innerhalb der besagten Garkammer (4) definieren, und ein Öffnungs- und Schließelement (7), das bewegbar oder drehbar ist zwischen:
einer offenen Betriebsposition (OP), in der es eine erste Öffnung (FO) für den Zugang zum besagten Garraum (CS) definiert,
mindestens einer teilweise offenen Betriebsposition (PP), in der es mit der besagten Bodenwand (5) und/oder Oberwand und mit der besagten Vielzahl von Umfangswänden (6a, 6b, 6c, 6d) eine zweite Öffnung (SO) für den Zugang zu dem besagten Garraum (CS) oder, bei Verwendung, für das Austreten von Wärme aus dem besagten Garraum (CS) definiert, wobei die besagte zweite Öffnung (SO) räumlich kleiner als die besagte erste Öffnung (FO) ist, und
einer geschlossenen Betriebsposition (CP), in der es den Zugang zum Garraum (CS) verschließt oder blockiert oder, bei Verwendung, verhindert, dass Wärme aus dem besagten Garraum austritt,
**dadurch gekennzeichnet, dass** er umfasst
mindestens einen Einstell- und Steuermechanismus (8), der ausgelegt ist, um die Betriebsposition (OP, PP, CP) des besagten Öffnungs- und Schließelements (7) einzustellen und zu steuern, so dass die besagte Garkammer (4), bei Verwendung, wenn das besagte Öffnungs- und Schließelement (7) in der besagten geschlossenen Betriebsposition (CP) ist, als ein Garofen einsetzbar ist, während, wenn das besagte Öffnungs- und Schließelement (7) in der besagten offenen Betriebsposition (OP) oder in der besagten mindestens einen teilweise offenen Betriebsposition (PP) ist, als ein Kochfeld mit einstellbarem Luftstrom.

2. Ofen (1) nach Anspruch 1, worin das besagte Öffnungs- und Schließelement (7) gelenkig mit der Garkammer (4) verbunden ist, so dass es, nach der Bewegung des besagten Öffnungs- und Schließelements (7) zwischen den verschiedenen Betriebspositionen (OP, PP, CP), innerhalb des durch den besagten Ofenkörper (2) begrenzten Umfangs beschränkt bleibt.

3. Ofen (1) nach Anspruch 1 oder 2, worin der besagte Einstell- und Steuermechanismus (8) ein erstes Teil (9) umfasst, das mit dem besagten Öffnungs- und Schließelement (7) oder mit der besagten Garkammer (4), enthaltend oder begrenzend einen Gleitschlitz oder eine Gleitnut (10), operativ verbunden ist, und ein zweites Teil (11), das mit der besagten Garkammer (4) oder mit dem besagten Öffnungs- und Schließelement (7) operativ verbunden ist, welches ein vorstehendes Element (12) umfasst oder definiert, das verschiebbar mit dem besagten Gleitschlitz oder der besagten Gleitnut (10) in Eingriff steht.

4. Ofen (1) nach dem vorangegangenen Anspruch, worin der besagte Gleitschlitz oder die besagte Gleitnut (10) zwei Flanken (F1, F2), ein erstes Ende (E1), ein zweites Ende (E2) distal von dem besagten ersten Ende (E1) und einen oder mehrere ausgehöhlte Abschnitte (10a), die ausgelegt sind, um das Verriegeln des besagten Öffnungs- und Schließelements (7) in mindestens einer der besagten Betriebspositionen (OP, PP, CP) zu ermöglichen, umfasst, wobei mindestens einer der besagten einen oder mehreren ausgehöhlten Abschnitte (10a) an oder nahe dem besagten ersten oder zweiten Ende (E1, E2) begrenzt ist.

5. Ofen (1) nach Anspruch 3 oder 4, worin das besagte vorstehende Element (12) verschiebbar in dem besagten Gleitschlitz oder der besagten Gleitnut (10) in Eingriff steht, so dass, wenn das besagte Öffnungs- und Schließelement (7) in mindestens einer teilweise offenen Betriebsposition (PP) ist, das besagte vorstehende Element (12) in dem besagten Gleitschlitz oder der besagten Gleitnut (10) stationär oder blockiert bleibt, um das besagte Öffnungs- und Schließelement (7) in der besagten mindestens einen teilweise offenen Betriebsposition (PP) stationär oder blockiert zu halten.

6. Ofen (1) nach irgendeinem der vorangegangenen Ansprüche, worin die besagte Garkammer (4) über der besagten Brennkammer (3) enthalten oder begrenzt ist, um, bei Verwendung, die betriebliche Übertragung von Wärme mit der besagten Brennkammer (3) zu verbessern oder zu erleichtern.

7. Ofen (1) nach irgendeinem der vorangegangenen Ansprüche, umfassend lösbare Handhabungsmittel (13), die ausgelegt sind, um:
mit dem besagten Öffnungs- und Schließelement (7) in operativ verbunden zu sein, wenn es erforderlich ist, die besagte Betriebsposition (OP, PP, CP) des letzteren zu regeln, und
von dem besagten Öffnungs- und Schließelement (7) operativ getrennt zu sein, sobald die Einstellung der besagten Betriebsposition (OP, PP, CP) abgeschlossen wurde.

8. Ofen (1) nach dem vorangegangenen Anspruch, worin die besagten lösbaren Handhabungsmittel (13) mindestens eine Befestigungskomponente (14) umfassen, die mindestens ein Griffelement oder einen Griffabschnitt (14a), der ausgelegt ist, um von einem Benutzer ergriffen zu werden, um das besagte Öffnungs- und Schließelement (7) zu bewegen, und mindestens ein Verbindungselement oder einen Verbindungsabschnitt (14b), das/der ausgelegt ist, um lösbar mit dem besagten Öffnungs- und Schließelement (7) verbunden zu sein, enthält oder begrenzt.

9. Ofen (1) nach Anspruch 7 oder 8, umfassend Kupplungsmittel (15), operativ mit dem besagten Öffnungs- und Schließelement (7) verbunden, die ausgelegt sind, um die lösbare Kupplung der besagten Handhabungsmittel (13) zu ermöglichen.

10. Ofen (1) nach dem vorangegangenen Anspruch, worin die besagten Kupplungsmittel (15) ein Stützelement (16), das mindestens eine Einführöffnung (EO) definiert, und Verbindungsmittel (17), die in die besagte mindestens eine Einführöffnung (EO) zur Verbindung des besagten Stützelements (16) mit dem besagten Öffnungs- und Schließelement (7) eingesetzt sind, umfassen.

11. Ofen (1) nach dem vorangegangenen Anspruch, worin das besagte Stützelement (16) mit dem besagten Öffnungs- und Schließelement (7) ein Kupplungsfach (CC) für die besagten lösbaren Handhabungsmittel (13) definiert.

12. Ofen (1) nach Anspruch 10 oder 11, worin das besagte Stützelement (16) einen zentralen Abschnitt (16a) umfasst oder begrenzt und die besagte mindestens eine Einführöffnung (EO) an oder um den besagten zentralen Abschnitt (16a) herum begrenzt ist.

13. Ofen (1) nach irgendeinem der Ansprüche 10 bis 12, worin das besagte Verbindungselement oder der besagte Verbindungsabschnitt (14b) eine erste Zinke (14b1) und eine zweite Zinke (14b2) umfasst, die miteinander einen Eingriffs- oder Einspannraum (ES) für das besagte Kupplungsmittel (15) definieren.

14. Ofen (1) nach irgendeinem der Ansprüche 3 bis 13, umfassend eine Verbindungskomponente (20), die einen ersten Endabschnitt (T1) und einen zweiten Endabschnitt (T2) enthält, wobei die besagte Verbindungskomponente (20) in dem besagten ersten Endabschnitt (T1) mit dem besagten Öffnungs- und Schließelement (7) fixiert und in dem besagten zweiten Endabschnitt (T2) mit dem besagten ersten Teil (9) operativ verbunden ist.

15. Ofen (1) nach irgendeinem der Ansprüche 10 bis 14, worin die besagte Garkammer (4) mindestens einen Hauptpositionierungssitz (MPS) für die besagten Kupplungsmittel (15) definiert oder umfasst, so dass, wenn das besagte Öffnungs- und Schließelement (7) in der besagten geschlossenen Betriebsposition (CP) ist, die besagten Kupplungsmittel (15) in dem besagten mindestens einen Hauptpositionierungssitz (MPS) positioniert sind und das besagte Öffnungs- und Schließelement (7) in der Lage ist, den Zugang zu dem besagten Garraum (CS) zu schließen oder zu blockieren oder, bei Verwendung, das Austreten von Wärme aus diesem zu verhindern.

## Revendications

1. Poêle à combustible solide (1) comprenant un corps de poêle (2) qui comprend ou définit une chambre de combustion (3) et une chambre de cuisson (4) qui, pendant l'utilisation, reçoit de la chaleur de ladite chambre de combustion (3), ladite chambre de cuisson (4) comprenant une paroi inférieure (5) et/ou une paroi supérieure, une pluralité de parois périphériques (6a, 6b, 6c, 6d) qui définissent avec ladite paroi inférieure (5) et/ou paroi supérieure un espace de cuisson (CS) à l'intérieur de ladite chambre de cuisson (4), et un élément d'ouverture et de fermeture (7) mobile ou rotatif entre :
une position de fonctionnement ouverte (OP), dans laquelle il définit une première ouverture (FO) pour accéder audit espace de cuisson (CS),
au moins une position de fonctionnement partiellement ouverte (PP), dans laquelle il définit avec ladite paroi inférieure (5) et/ou paroi supérieure et avec ladite pluralité de parois périphériques (6a, 6b, 6c, 6d) une deuxième ouverture (SO) pour accéder audit espace de cuisson (CS) ou, pendant l'utilisation, de la chaleur s'échappant dudit espace de cuisson (CS), ladite deuxième ouverture (SO) étant spatialement plus petite que ladite première ouverture (FO), et
une position de fonctionnement fermée (CP), dans laquelle il ferme ou bloque l'accès ou, pendant l'utilisation, empêche la chaleur de s'échapper dudit espace de cuisson (CS),
**caractérisé en ce qu'**il comprend :
au moins un mécanisme de réglage et de commande (8) configuré pour régler et commander la position de fonctionnement (OP, PP, CP) dudit élément d'ouverture et de fermeture (7) de sorte que ladite chambre de cuisson (4) soit, pendant l'utilisation, utilisable, lorsque ledit élément d'ouverture et de fermeture (7) est dans ladite position de fonctionnement fermée (CP), en tant qu'un four de cuisson tandis que ledit élément d'ouverture et de fermeture (7) est dans ladite position de fonctionnement ouverte (OP) ou dans ladite au moins une position de fonctionnement partiellement ouverte (PP) comme une table de cuisson avec débit d'air réglable.

2. Poêle (1) selon la revendication 1, dans lequel ledit élément d'ouverture et de fermeture (7) est articulé à la chambre de cuisson (4), de sorte que, suivant le mouvement dudit élément d'ouverture et de fermeture (7) entre les différentes positions de fonctionnement (OP, PP, CP), il reste confiné dans le périmètre délimité par ledit corps de poêle (2).

3. Poêle (1) selon la revendication 1 ou 2, dans lequel ledit mécanisme de réglage et de commande (8) comprend un premier élément (9), connecté de manière fonctionnelle audit élément d'ouverture et de fermeture (7) ou à ladite chambre de cuisson (4), comprenant ou délimitant une fente ou une rainure coulissante (10) et un deuxième élément (11), connecté de manière fonctionnelle à ladite chambre de cuisson (4) ou audit élément d'ouverture et de fermeture (7), qui comprend ou définit un élément saillant (12) engagé de manière coulissante dans ladite fente ou rainure coulissante (10) .

4. Poêle (1) selon la revendication précédente, dans lequel ladite fente ou rainure coulissante (10) comprend deux flancs (F1, F2), une première extrémité (E1), une deuxième extrémité (E2) distale de ladite première extrémité (E1), et une ou plusieurs parties creuses (10a) configurées pour permettre le verrouillage dudit élément d'ouverture et de fermeture (7) dans au moins une desdites positions de fonctionnement (OP, PP, CP), au moins une dedites une ou plusieurs parties creuses (10a) étant délimitées à ou à proximité de ladite première ou à la deuxième extrémité (E1, E2).

5. Poêle (1) selon la revendication 3 ou 4, dans lequel ledit élément saillant (12) est engagé de manière coulissante dans ladite fente ou rainure coulissante (10) de sorte que, lorsque ledit élément d'ouverture et de fermeture (7) est dans au moins une position de fonctionnement partiellement ouverte (PP), ledit élément saillant (12) reste immobile ou bloqué dans ladite fente ou rainure coulissante (10) pour maintenir ledit élément d'ouverture et de fermeture (7) immobile ou bloqué dans ledit au moins une position partiellement ouverte position de fonctionnement (PP).

6. Poêle (1) selon l'une quelconque des revendications précédentes, dans lequel ladite chambre de cuisson (4) est incluse ou délimitée au-dessus de ladite chambre de combustion (3) pour améliorer ou faciliter, pendant l'utilisation, le transfert opérationnel de chaleur avec ladite chambre de combustion (3).

7. Poêle (1) selon l'une quelconque des revendications précédentes, comprenant des moyens de manutention amovibles (13) configurés pour être :
connectés de manière opérationnelle audit élément d'ouverture et de fermeture (7) s'il est nécessaire de régler ladite position de fonctionnement (OP, PP, CP) de ce dernier, et
déconnectés de manière opérationnelle dudit élément d'ouverture et de fermeture (7) une fois que le réglage de ladite position de fonctionnement (OP, PP, CP) a été effectué.

8. Poêle (1) selon la revendication précédente, dans lequel lesdits moyens de manutention amovibles (13) comprennent au moins un composant de contrainte (14) qui comprend ou délimite au moins un élément ou une partie de poignée (14a) configuré pour être saisi par un utilisateur pour déplacer ledit élément d'ouverture et de fermeture (7) et au moins un élément ou une partie de connexion (14b) configuré pour être connecté de manière amovible audit élément d'ouverture et de fermeture (7).

9. Poêle (1) selon la revendication 7 ou 8, comprenant des moyens d'accouplement (15), connectés de manière fonctionnelle audit élément d'ouverture et de fermeture (7), configurés pour permettre l'accouplement amovible desdits moyens de manutention (13).

10. Poêle (1) selon la revendication précédente, dans lequel lesdits moyens d'accouplement (15) comprennent un élément de support (16), qui définit au moins une ouverture d'insertion (EO), et des moyens de connexion (17) insérés dans ladite au moins une ouverture d'insertion (EO) pour connecter ledit élément de support (16) audit élément d'ouverture et de fermeture (7) .

11. Poêle (1) selon la revendication précédente, dans lequel ledit élément de support (16) définit avec ledit élément d'ouverture et de fermeture (7) un compartiment d'accouplement (CC) pour lesdits moyens de manutention amovibles (13).

12. Poêle (1) selon la revendication 10 ou 11, dans lequel ledit élément de support (16) comprend ou délimite une partie centrale (16a) et ladite au moins une ouverture d'insertion (EO) est délimitée au niveau ou autour de ladite partie centrale (16a).

13. Poêle (1) selon l'une quelconque des revendications 10 à 12, dans lequel ledit élément ou partie de connexion (14b) comprend une première griffe (14b1) et une deuxième griffe (14b2) qui définissent mutuellement un engagement ou un espace de greffe (ES) pour lesdits moyens d'accouplement (15).

14. Poêle (1) selon l'une quelconque des revendications 3 à 13, comprenant un composant de connexion (20) qui comprend une première partie terminale (T1) et une deuxième partie terminale (T2), ledit composant de connexion (20) étant fixé, dans ladite première partie terminale (T1), avec ledit élément d'ouverture et de fermeture (7) et connecté de manière opérationnelle, dans ladite deuxième partie terminale (T2) avec ledit premier élément (9).

15. Poêle (1) selon l'une quelconque des revendications 10 à 14, dans lequel ladite chambre de cuisson (4) définit ou comprend au moins un siège de positionnement principal (MPS) pour lesdits moyens d'accouplement (15) de sorte que lorsque ledit élément d'ouverture et de fermeture (7) est dans ladite position de fonctionnement fermée (CP), lesdits moyens d'accouplement (15) sont positionnés dans ledit au moins un siège de positionnement principal (MPS) et ledit élément d'ouverture et de fermeture (7) est capable de fermer ou de bloquer l'accès ou, pendant l'utilisation, empêcher la chaleur de s'échapper dudit espace de cuisson (CS).
